# EUROPEAN PATENT APPLICATION

(11) **EP 4 379 878 A1**
(43) Date of publication of application: **05.06.2024**
(21) Application number: 21951129.2
(22) Date of filing: 28.09.2021
(51) Int. Cl.: H01M 10/04, H01M 50/103, H01M 50/15, H01M 50/538, H01M 50/55

(54) **SECONDARY BATTERY**

(30) Priority: 29.07.2021 JP 2021124776
(71) Applicant: Vehicle Energy Japan Inc., Ibaraki 312-8505 (JP)
(72) Inventor: SUZUKI, Takayuki, Hitachinaka-shi, Ibaraki 312-8505 (JP); MASUDA, Hiroaki, Hitachinaka-shi, Ibaraki 312-8505 (JP)
(74) Representative: Strehl Schübel-Hopf & Partner
(86) International application number: PCT/JP2021/035490
(87) International publication number: WO 2023/007756

(57) **Abstract**

A secondary battery in which a storage element that charges and discharges electricity is housed in an exterior body includes a box body configuring the exterior body and opened on one surface side and a lid that closes the one surface side of the box body, an external terminal attached to the lid to expose at least a part thereof to the outside from the lid, and a current collector that electrically connects the storage element and the external terminal. The current collector includes a first extending section electrically connected to the storage element and a plate-like second base disposed along the lid and electrically connected to the external terminal. The base includes a first base constituent section that is a part that forms one end side in a longitudinal direction of the base and continues from the first extending section and a second base constituent section that forms the other end side in the longitudinal direction of the base and is connected to the external terminal. The second base constituent section is formed thinner than the first base constituent section.

## Description

### Technical Field

The present invention relates to a secondary battery and is suitably applied to, for example, a lithium ion secondary battery.

### Background Art

In recent years, large-capacity secondary batteries used for power sources of an electric vehicle (EV) and a hybrid vehicle have been developed. Among the large-capacity secondary batteries, a lithium ion secondary battery having high energy density has been attracting attention. For a lithium ion secondary battery for automobiles, since an environmental performance has become increasingly important in recent years, higher energy density and safety are required.

In general, the lithium ion secondary battery includes a positive electrode and a negative electrode and a separator for electrically insulating the positive electrode and the negative electrode and has a basic configuration in which the positive electrode and the negative electrode are stacked via the separator. In the positive electrode and the negative electrode, usually, an active material layer is formed by applying, to a surface of a belt-like metal foil, slurry containing an active material into and from which lithium ions can be inserted and desorbed. The positive electrode and the negative electrode and the separator are formed as, for example, an electrode group wound in a state of being superimposed one on top of another and are encapsulated in a state of being put in a can or a laminate exterior body and impregnated in an electrolytic solution.

There is Patent Literature 1 as a background art in the present technical field. Patent Literature 1 discloses that a thin section is provided in a base section of a positive electrode current collection plate that connects a positive electrode of a wound electrode body, which is a storage capacitor housed in a square exterior body of a secondary battery, and a positive electrode terminal of the secondary battery and the positive electrode terminal is fixed to the positive electrode current collection plate to be caulked after a distal end of the positive electrode terminal is inserted into a through-hole provided in the thin section.

### Citation List

### Patent Literature

Patent Literature 1: Japanese Patent Application Laid-Open No. 2016-189246

### Summary of Invention

### Technical Problem

In the secondary battery disclosed in Patent Literature 1 explained above, since only a connecting section to the positive electrode terminal is thinned, there is a problem in that a volume and a weight of the positive electrode current collection plate become excessively large and it is difficult to reduce a square secondary battery in size and weight. When a current collection plate in the entire periphery of a base of a terminal caulking and fixing section is increased in thickness as disclosed in Patent Literature 1, there is also a problem in that an effect of heat generation suppression cannot be obtained.

The present invention has been devised in view of the points described above and proposes a secondary battery that can suppress heat generation while being reduced in size and weight.

### Solution to Problem

In order to solve the problems described above, in the present invention, a secondary battery in which a storage element that charges and discharges electricity is housed in an exterior body includes: a box body configuring the exterior body and opened on one surface side and a lid that closes the one surface side of the box body; an external terminal attached to the lid to expose at least a part thereof to an outside from the lid; and a current collector that electrically connects the storage element and the external terminal. The current collector includes: a first extending section electrically connected to the storage element; and a plate-like second base disposed along the lid and electrically connected to the external terminal. The base includes: a first base constituent section that is a part continuing from the first extending section; and a second base constituent section connected to the external terminal. The second base constituent section is formed thinner than the first base constituent section.

With the secondary battery of the present invention, it is possible to prevent electric resistance of a current path from the current collector to the external terminal from increasing and suppress heat generation of the current collector. Since the second base constituent section of the current collector is formed thinner than the first base constituent section, it is possible to reduce the current collector in weight.

### Advantageous Effect of Invention

According to the present invention, it is possible to implement a secondary battery that can suppress heat generation while being reduced in size and weight.

### Brief Description of Drawings

[Figure 1] Figure 1 is a perspective view showing a configuration of a secondary battery according to first to fourth embodiments.
[Figure 2] Figure 2 is an exploded perspective view showing an internal configuration of the secondary battery shown in Figure 1.
[Figure 3] Figure 3 is an exploded perspective view showing a configuration of a storage element.
[Figure 4] Figure 4 is a sectional view showing a configuration of a positive electrode current collection plate according to the first embodiment.
[Figure 5] Figure 5 is a sectional view showing the configuration of the positive electrode current collection plate according to the first embodiment.
[Figure 6] Figure 6 is a schematic diagram showing a state of a flow of an electric current in the positive electrode current collection plate according to the first embodiment.
[Figure 7] Figure 7 is a sectional view showing a configuration of a positive electrode current collection plate according to a second embodiment.
[Figure 8] Figure 8 is a sectional view showing the configuration of the positive electrode current collection plate according to the second embodiment.
[Figure 9] Figure 9 is a sectional view schematically showing a configuration of a positive electrode current collection plate according to a third embodiment.
[Figure 10] Figure 10 is a sectional view schematically showing a configuration of a positive electrode current collection plate according to a fourth embodiment.

### Description of Embodiments

Embodiments of the present invention are explained in detail below with reference to the drawings.

### (1) First Embodiment

### (1-1) Configuration of a secondary battery according to this embodiment.

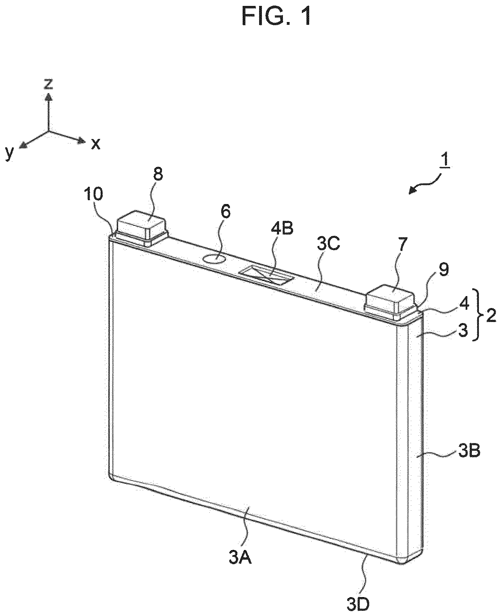

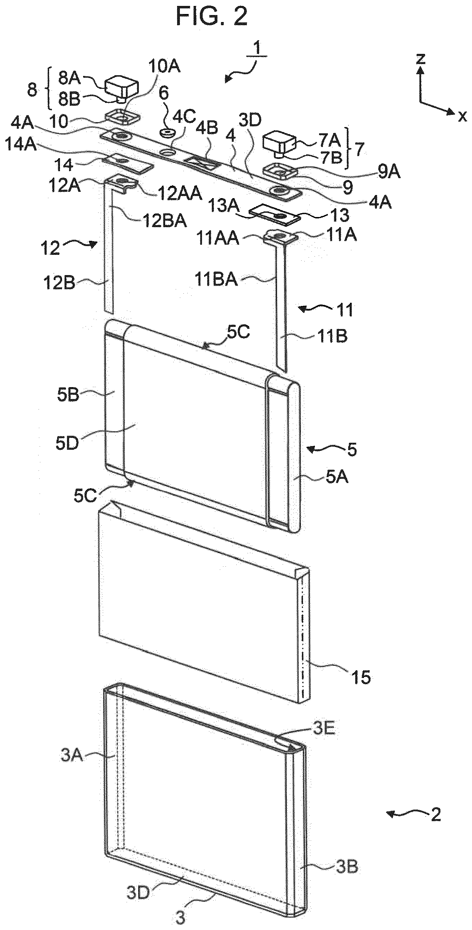

In Figure 1 and Figure 2, reference numeral 1 denotes a secondary battery according to this embodiment. The secondary battery is, for example, a flat square lithium ion secondary battery loaded on an electric vehicle or a hybrid vehicle as a power source.

Note that, in the following explanation, configurations of sections of the secondary battery 1 are sometimes explained using an xyz orthogonal coordinate system in which a width direction of the secondary battery is represented as an x direction, a thickness direction of the secondary battery is represented as a y direction, and a height direction of the secondary battery is represented as a z direction. Up-down and left-right directions in the following explanation are convenient directions for explaining the configurations of the sections of the secondary battery 1 based on the drawings and are not limited to a vertical direction and a horizontal direction.

The secondary battery 1 includes a battery container 2 that forms a sealed container and houses a storage element 5 explained below. The battery container 2 is, for example, a metal container having a flat rectangular box-like shape. The battery container 2 includes a pair of wide side surfaces 3A extending in the width direction (the x direction), a pair of narrow side surfaces 3B extending in the thickness direction (the y direction), and an upper surface 3C and a bottom surface 3D having an elongated rectangular shape. The wide side surface 3A among the wide side surface 3A, the narrow side surface 3B, the upper surface 3C, and the bottom surface 3D has the largest area.

The battery container 2 is configured from, for example, a battery can 3, which is a flat square box body opened on one surface side in the height direction (the z direction) and a rectangular plate-like battery lid 4 that closes an opening section 3E of the battery can 3. The battery can 3 and the battery lid 4 are made of a metal material such as an aluminum alloy and are formed by deep digging or pressing.

After the storage element 5 that stores electricity is loaded on the inside of the battery can 3 via the opening section 3E, the opening section 3E of the battery can 3 is sealed by the battery lid 4 by joining the periphery of the battery lid 4 over the entire periphery of the opening section 3E by laser welding or the like.

In the battery lid 4, at both the end portions in a longitudinal direction, which is the width direction of the secondary battery 1 (the x direction), a through-hole 4A for inserting through parts of a positive electrode external terminal 7 and a negative electrode external terminal 8 explained below is drilled. A gas discharge valve 4B is formed in the center in the longitudinal direction. The gas discharge valve 4B is, for example, a portion obtained by pressing and thinning a part of the battery lid 4 and forming a slit and is formed integrally with the battery lid 4. The gas discharge valve 4B is cleaved when the internal pressure of the battery container 2 rises to a predetermined pressure to discharge gas in the battery container 2 to the container outside, whereby the internal pressure of the battery container 2 is reduced and the safety of the secondary battery 1 is secured.

In the battery lid 4, for example, a liquid injection hole 4C is drilled between the through-hole and the gas discharge valve. The liquid injection hole 4C is a hole for injecting an electrolytic solution into the inside of the battery lid 4. After the injection of the electrolytic solution, the liquid injection hole 4C is sealed by joining a liquid injection plug 6 by, for example, laser welding. As the electrolytic solution injected into the battery container 2, for example, a nonaqueous electrolytic solution obtained by dissolving lithium salt such as lithium hexafluoroscale (LiPF₆) in a carbonic acid ester-based organic solvent such as ethylene carbonate can be used.

In addition, the positive electrode external terminal 7 and the negative electrode external terminal 8 are fixed to the battery lid 4. The positive electrode external terminal 7 and the negative electrode external terminal 8 are disposed to be separated in the longitudinal direction of the outer surface of the battery lid 4 (the upper surface 3C of the battery container 2) and are electrically and physically connected to, via the battery lid 4, a positive electrode current collection plate 11 or a negative electrode current collection plate 12 respectively corresponding thereto on the inside of the battery container 2. The positive electrode external terminal 7 is made of, for example, aluminum or an aluminum alloy. The negative electrode external terminal 8 is made of, for example, copper or a copper alloy.

The positive electrode external terminal 7 and the negative electrode external terminal 8 include joining sections 7A and 8A respectively connected to, for example, bus bars and connecting sections 7B and 8B respectively connected to the positive electrode current collection plate 11 or the negative electrode current collection plate 12. The joining sections 7A and 8A are formed in a substantially rectangular parallelepiped shape and fixed to the outer surface of the battery lid 4 via gaskets 9 and 10 made of an insulating member. The connecting sections 7B and 8B are columnar or cylindrical portions extending in a direction for piercing through the battery lid 4 from the bottom surface sides of the joining sections 7A and 8A facing the battery lid 4 and are formed integrally with the joining sections 7A and 8A.

As shown in Figure 2, the positive electrode current collection plate 11 and the negative electrode current collection plate 12 are respectively plate-like members bent into predetermined shapes and are connected to the storage element 5. The positive electrode current collection plate 11 connects the positive electrode external terminal 7 and a positive electrode stacked section 5A explained below, which is a positive electrode of the entire storage element 5. The negative electrode current collection plate 12 connects the negative electrode external terminal 8 and a negative electrode stacked section 5B explained below, which is a negative electrode of the entire storage element 5. The positive electrode current collection plate 11 is made of, for example, aluminum or an aluminum alloy. The negative electrode current collection plate 12 is made of, for example, copper or a copper alloy.

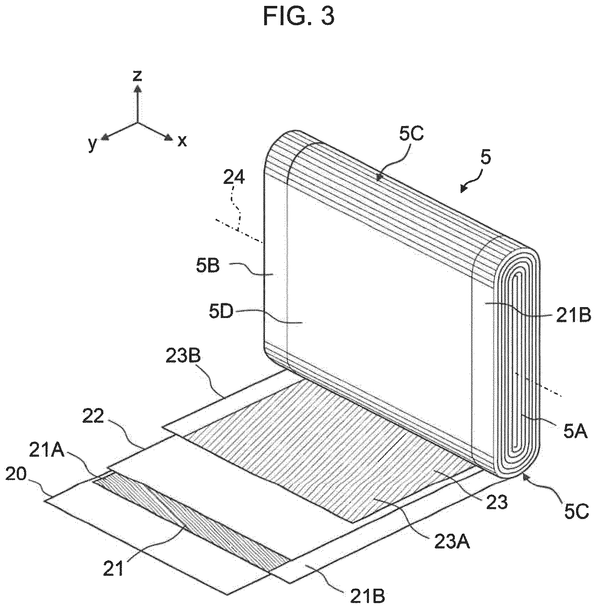

The positive electrode current collection plate 11 and the negative electrode current collection plate 12 are configured from bases 11A and 12A respectively formed to be bend to be located along the battery lid 4 and connected to the positive electrode external terminal 7 or the negative electrode external terminal 8 corresponding thereto and extending sections 11B and 12B extending in a bottom surface 3D direction along the wide side surface 3A of the battery can 3. Joining sections 11BA and 12BA of the extending section 11B and 12B are respectively joined to, by ultrasonic joining or the like, the positive electrode stacked section 5A, on which a positive electrode foil exposed section 23B (Figure 3) of the storage element 5 are wound and stacked flat, and a negative electrode of the storage element 5.

Figure 3 shows a state in which a part of the storage element 5 is expanded. The storage element 5 is formed in a flat shape by superimposing a first separator 20, a negative electrode 21, a second separator 22, and a positive electrode 23, which are respectively formed in belt shapes, in this order and winding these with the positive electrode 23 set on the inner side. In this case, the first and second separators 20 and 22 are formed from an insulating material, whereby the negative electrode 21 and the positive electrode 23 are wound in an insulated state.

The negative electrode 21 includes, on both surfaces of a negative electrode metal foil, which is a negative electrode current collector, a negative electrode mixture layer 21A formed by applying a negative electrode active material (a negative electrode mixture) and a negative electrode foil exposed section 21B that is provided on one end side in the width direction of the negative electrode metal foil (the x direction) and to which the negative electrode mixture is not applied.

The negative electrode metal foil is configured from, for example, a coper foil having a thickness of approximately 10 µm. The negative electrode mixture layer 21A is formed at a thickness of approximately 70 µm by applying a slurry-like negative electrode mixture to the negative electrode metal foil and drying and pressing the applied negative electrode mixture. The negative electrode 21 is manufactured by cutting, as appropriate, the negative electrode metal foil on which the negative electrode mixture layer 21A is formed.

As the slurry of the negative electrode mixture, for example, slurry obtained by adding 10 parts by weight of polyvinylidene fluoride (PVDF), which is a binding agent, to 100 parts by weight of amorphous carbon powder, which is a negative electrode mixture, and further adding N-methylpyrrolidone (NMP) to the amorphous carbon powder as a dispersion solvent and kneading the amorphous carbon powder added with the polyvinylidene fluoride and the N-methylpyrrolidone can be used.

Note that the negative electrode active material included in the negative electrode mixture layer 21A is not limited to the amorphous carbon explained above. For example, as the negative electrode active material, natural graphite into and from which lithium ions can be inserted and desorbed, artificial various graphite materials, a carbonaceous material such as cokes, a compound of Si, Sn, or the like (for example, SiO or TiSi₂), or a complex material of the foregoing can be used. A particle shape of the negative electrode active material is not particularly limited and may be, for example, a scale shape, a spherical shape, a fiber shape, or a lump shape.

On the other hand, the positive electrode 23 includes, on both surfaces of a positive electrode metal foil, which is a positive electrode current collector, a positive electrode mixture layer 23A formed by applying a positive electrode active material (a positive electrode mixture) and a positive electrode foil exposed section 23B that is provided on the other end side in the width direction of the positive electrode metal foil (the x direction) and to which the positive electrode mixture is not applied.

The positive electrode metal foil is configured from, for example, an aluminum foil having a thickness of approximately 20 µm. The positive electrode mixture layer 23A is formed at a thickness of approximately 90 µm by applying a slurry-like positive electrode mixture and drying and pressing the applied positive electrode mixture. The positive electrode 23 is manufactured by cutting, as appropriate, the positive electrode metal foil on which the positive electrode mixture layer 23A is formed.

As the slurry of the positive electrode mixture, for example, slurry obtained by adding 10 parts by weight of scale-like graphite, which is a conductive material, and 10 parts by weight of PVDF, which is a binding agent, to 100 parts by weight of lithium manganate (LiMn₂O₄), which is a positive electrode mixture, and further adding NMP to the lithium manganate as a dispersion solvent and kneading the lithium manganate added with the scale-like graphite, the PVDF, and the NMP can be used.

Note that the positive electrode active material included in the positive electrode mixture layer 23A is not limited to the lithium manganate. For example, as the positive electrode active material, other lithium manganate having a spinel crystal structure and a lithium-manganese complex oxide, a part of which is replaced or doped with a metal element, can be used. As the positive electrode active material, lithium cobaltate and lithium titanate having a layered crystal structure and a lithium-metal complex oxide, a part of which is replaced or doped with a metal element may be used.

The binding agent used in the negative electrode mixture and the positive electrode mixture is not limited to the PVDF. A polymer such as Polytetrafluoroethylene (PTFE), polyethylene, polystyrene, polybutadiene, butyl rubber, nitrile rubber, styrene butadiene rubber, polysulfide rubber, nitrocellulose, cyanoethyl cellulose, various latexes, acrylonitrile, polyvinyl fluoride, vinylidene fluoride, propylene fluoride, chloroprene fluoride, or acrylic resin, or a mixture of these polymers can be used as the binding agent.

Although illustration is omitted, the storage element 5 may include a shaft core for stacking and winding the first separator 20, the negative electrode 21, the second separator 22, and the positive electrode 23. As the shaft core, for example, a shaft core obtained by winding a resin sheet having flexural rigidity higher than the flexural rigidity of the positive electrode metal foil and the negative electrode metal foil and the first and second separators 20 and 22 can be used. The storage element 5 is configured such that a dimension of the negative electrode mixture layer 21A is larger than a dimension of the positive electrode mixture layer 23A in a winding axis 24 direction (the x direction) and the positive electrode mixture layer 23A is always held between negative electrode mixture layers 21A.

In the storage element 5, the positive electrode foil exposed section 23B of the positive electrode 23 and the negative electrode foil exposed section 21B of the negative electrode 21 are respectively wound and stacked on one end side and the other end side in the winding axis 24 direction (the x direction) as shown in Figure 3. The positive electrode foil exposed section 23B and the negative electrode foil exposed section 21B are bound flat and joined to the joining sections 11BA and 12BA of the extending sections 11B and 12B of the positive electrode current collection plate 11 or the negative electrode current collection plate 12 corresponding thereto by, for example, ultrasonic joining or resistive joining as shown in Figure 2.

Note that, in the winding axis 24 direction (the x direction), a dimension of the first and second separators 20 and 22 is larger than a dimension of the negative electrode mixture layer 21A of the negative electrode 21. However, end portions of the first and second separators 20 and 22 are disposed in positions further on the inner side of the storage element 5 in the winding axis 24 direction (the x direction) than end portions of the positive electrode foil exposed section 23B of the positive electrode 23 and the negative electrode foil exposed section 21B of the negative electrode 21. Therefore, the first and second separators 20 and 22 are not obstacles when the positive electrode foil exposed section 23B of the positive electrode 23 and the negative electrode foil exposed section 21B of the negative electrode 21 are respectively bound and respectively joined to the joining section 11BA of the extending section 11B of the positive electrode current collection plate 11 and the joining section 12BA of the extending section 12B of the negative electrode current collection plate 12.

The base 11A of the positive electrode current collection plate 11 and the base 12A of the negative electrode current collection plate 12 are respectively fixed to the battery lid 4 via plate-like insulating members 13 and 14 and connected to the positive electrode external terminal 7 or the negative electrode external terminal 8 corresponding thereto. More specifically, a connecting section 7B of the positive electrode external terminal 7 and a connecting section 8B of the negative electrode external terminal 8 are inserted through, for example, through-holes 9A and 10A of the gaskets 9 and 10, a through-hole 4A of the battery lid 4, through-holes 13A and 14A of the insulating members 13 and 14, and through-holes 11AA and 12AA of the bases 11A and 12A of the positive electrode current collection plate 11 or the negative electrode current collection plate 12 corresponding thereto and caulked to be plastically deformed such that distal ends of the connecting sections 7B and 8B are expanded in diameter on the lower surfaces of the bases 11A and 12A of the positive electrode current collection plate 11 and the negative electrode current collection plate 12. Consequently, the positive electrode external terminal 7 and the positive electrode current collection plate 11 are electrically connected to each other and the negative electrode external terminal 8 and the negative electrode current collection plate 12 are electrically connected and the positive electrode external terminal 7 and the positive electrode current collection plate 11 and the negative electrode external terminal 8 and the negative electrode current collection plate 12 are respectively fixed to the battery lid 4 in a state in which the positive electrode external terminal 7 and the positive electrode current collection plate 11 and the negative electrode external terminal 8 and the negative electrode current collection plate 12 are respectively electrically insulated via the gaskets 9 and 10 and the insulating members 13 and 14.

The joining section 11BA of the extending section 11B of the positive electrode current collection plate 11 and the joining section 12BA of the extending section 12B of the negative electrode current collection plate 12 are respectively joined to the positive electrode stacked section 5A formed by stacking the positive electrode foil exposed section 23B of the storage element 5 and the negative electrode stacked section 5B formed by stacking the negative electrode foil exposed section 21B, whereby the positive electrode 23 and the negative electrode 21 configuring the storage element 5 are respectively electrically connected to the positive electrode external terminal 7 or the negative electrode external terminal 8 corresponding thereto via the positive electrode current collection plate 11 or the negative electrode current collection plate 12 corresponding thereto. The material of the gaskets 9 and 10 and the insulating members 13 and 14 are resin having electric insulation such as polyethylene terephthalate, polyphenylene sulfide, or perfluoroalkoxy alkane resin.

The storage element 5 is joined to the positive electrode current collection plate 11 and the negative electrode current collection plate 12 and is covered by an insulating cover 15 (Figure 2) made of resin having electric insulation in a state of being fixed to the battery lid 4 via the positive electrode current collection plate 11 or the negative electrode current collection plate 12 corresponding thereto and is loaded on the inside of the battery can 3 from the opening section 3E of the battery can 3. The insulating cover 15 is formed by assembling one sheet or a plurality of film members including synthetic resin such as polypropylene as a material. The insulating cover 15 has a dimension and a shape that can cover, integrally with the positive electrode current collection plate 11 and the negative electrode current collection plate 12, substantially the entire storage element 5 to which the positive electrode current collection plate 11 and the negative electrode current collection plate 12 are joined.

As shown in Figure 2 and Figure 3, the storage element 5 is wound in a flat shape and includes semicylindrical curved sections 5C provided at both the end portions in the height direction of the battery container 2 (the z direction) and a flat section 5D, which is flat, between the curved sections 5C. The storage element 5 is loaded in the battery can 3 from one curved section 5C such that the winding axis 24 direction extends in the width direction of the secondary battery 1 (the x direction) and is housed in the battery can 3 such that the other curved section 5C faces the battery lid 4. Thereafter, as explained above, the battery lid 4 is joined over the entire periphery of the opening section 3E of the battery can 3 to configure the battery container 2, the electrolytic solution is injected into the inside of the battery container 2 via the liquid injection hole 4C, and the battery container 2 is sealed by joining the liquid injection plug 6 to the liquid injection hole 4C.

With the configuration explained above, the secondary battery 1 can charge the storage element 5 by supplying electric power to the positive electrode 23 and the negative electrode 21 of the storage element 5 respectively via the positive electrode external terminal 7 and the positive electrode current collection plate 11 and the negative electrode external terminal 8 and the negative electrode current collection plate 12 and output electric power to the outside from the positive electrode 23 and the negative electrode 21 of the storage element 5 via the positive electrode current collection plate 11 and the positive electrode external terminal 7 and the negative electrode current collection plate 12 and the negative electrode external terminal 8.

### (1-2) Detailed configuration of the current collection plates

Next, a detailed configuration of the positive electrode current collection plate 11 in the secondary battery 1 is explained. Note that the negative electrode current collection plate 12 has the same configuration as the positive electrode current collection plate 11 and a relation between the positive electrode current collection plate 11 and the positive electrode external terminal 7 and a relation between the negative electrode current collection plate 12 and the negative electrode external terminal 8 are the same. Therefore, explanation of the negative electrode current collection plate 12 is omitted.

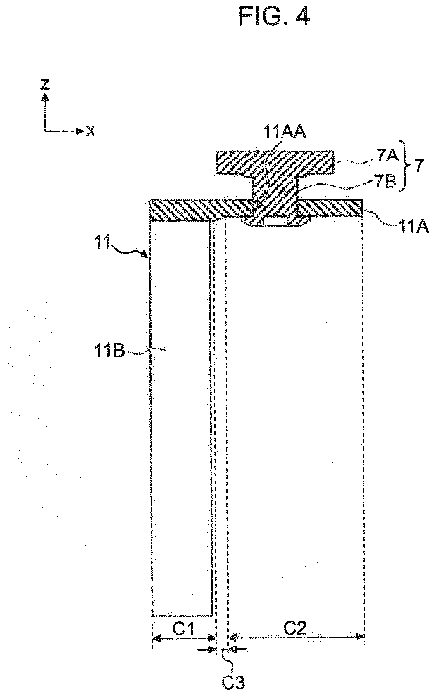

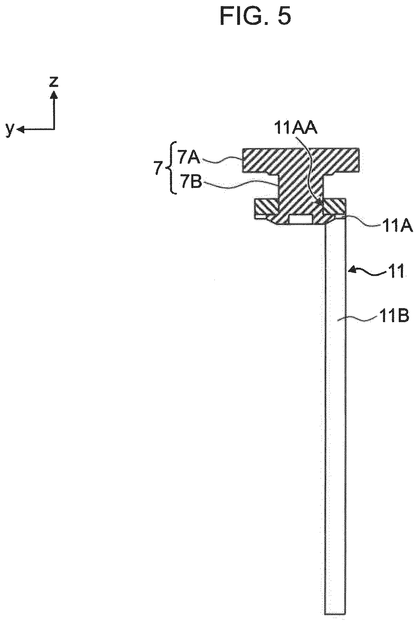

Figure 4 and Figure 5 show a state in which the positive electrode current collection plate 11 and the positive electrode external terminal 7 of the secondary battery 1 are connected. Specifically, Figure 4 shows a cross section in a plane parallel to an xz plane of the positive electrode current collection plate 11 and the positive electrode external terminal 7 in a state in which the positive electrode external terminal 7 is connected to the positive electrode current collection plate 11. Figure 5 shows a cross section in a plane parallel to a yz plane of the positive electrode current collection plate 11 and the positive electrode external terminal 7 in such a state.

As explained above, the positive electrode current collection plate 11 is configured from the base 11A formed to be bent to face the battery lid 4 in parallel and the extending section 11B extending in a direction of the bottom surface 3D along the wide side surface 3A of the battery can 3.

The base 11A of the positive electrode current collection plate 11 is configured from a first base constituent section C1 that is a part that configures one end side in the longitudinal direction of the base 11A and continues from the extending section 11B, a second base constituent section C2 that configures the other end side in the longitudinal direction of the base 11A and to which the positive electrode external terminal 7 is connected, and a third base constituting section C3 that is a constituent part of the base 11A between the first base constituent section C1 and the second base constituent section C2.

The positive electrode current collection plate 11 in this embodiment is characterized in that, whereas a thickness of the first base constituent section C1 (a thickness in the z direction of the first base constituent section C1) is the same as a thickness of the extending section 11B, the second base constituent section C2 is formed thinner (further thinned) than the first base constituent section C1 over the entire region in a direction from the first base constituent section C1 to the second base constituent section C2 (that is, the longitudinal direction of the base 11A of the positive electrode current collection plate 11) by pressing, cutting, or the like.

Specifically, the second base constituent section C2 is thinned such that a surface (the lower surface) facing the storage element 5 is located in a direction further separating from the storage element 5 than a surface (the lower surface) facing the storage element 5 in the first base constituent section C1. Therefore, the lower surface side of the third base constituent section C3 is formed in a taper shape inclined from the first base constituent section C1 to the second base constituent section C2.

As explained above, in the secondary battery 1 in this embodiment, by further thinning the entire second base constituent section C2 of the positive electrode current collection plate 11 than the first base constituent section C2, it is possible to correspondingly reduce the internal volume of the battery container 2 and, therefore, it is possible to further reduce the secondary battery 1 in size than in the related art.

When the second base constituent section C2 is thinned by pressing, since the second base constituent section C2 extends in a direction perpendicular to a pressing direction, it is necessary to cut an excess. By cutting such an excess, it is possible to reduce the positive electrode current collection plate 11 and the entire secondary battery 1 in weight. When the second base constituent section C2 is formed by cutting, naturally, it is possible to reduce the positive electrode current collection plate 11 and the entire secondary battery 1 in weight.

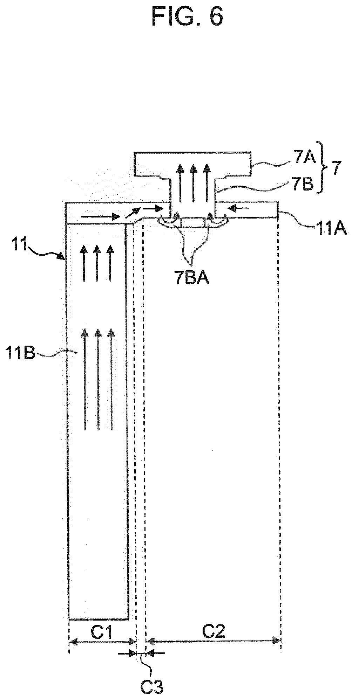

Figure 6 schematically shows a state of an electric current flowing between the positive electrode current collection plate 11 and the positive electrode external terminal 7. The electric current flowing between the negative electrode current collection plate 12 and the negative electrode external terminal 8 flows in an opposite direction of a direction shown in Figure 6 but flows on the same current path.

In the secondary battery 1 in this embodiment, since the second base constituent section C2 is thinner than the first base constituent section C1 in the base 11A of the positive electrode current collection plate 11, compared with when the second base constituent section C2 is formed in the same thickness as the first base constituent section C1, a current path of an electric current flowing from a caulked section 7BA of the positive electrode external terminal 7 to the positive electrode external terminal 7 is correspondingly shorter. As a result, it is possible to prevent electric resistance in the current path from the positive electrode current collection plate 11 to the positive electrode external terminal 7 from increasing. It is also possible to suppress heat generation of the positive electrode current collection plate 11.

Actually, according to a simulation, it was confirmed that a heat generation suppression effect was increased by setting a ratio of the thickness of the first base constituent section C1 and the thickness of the second base constituent section C2 to 5:2 or higher and 5:3 or lower.

Therefore, according to this embodiment, it is possible to effectively reduce the volumes and the weights of the positive electrode current collection plate 11 and the negative electrode current collection plate 12 of the secondary battery 1. Therefore, it is possible to further reduce the secondary battery 1 in size and weight than in the related art. It is also possible to implement a secondary battery that suppresses heat generation and withstands charge and discharge of a large current.

In addition, in the case of this embodiment, the second base constituent section C2 in the base 11A of the positive electrode current collector 11 is formed thicker than the second base constituent section C2 in the base 12A of the negative electrode current collection plate 12. This is because, since the resistivity of aluminum or an aluminum alloy, which is the material of the positive electrode current collection plate 11, is higher than the resistivity of copper or a copper alloy, which is the material of the negative electrode current collection plate 12, the resistance of the second base constituent section C1 of the positive electrode current collection plate 11 is reduced by forming the second base constituent section C2 in the base 11A of the positive electrode current collection plate 11 thicker than the second base constituent section C2 in the base 12A of the negative electrode current collection plate 12.

Consequently, with the secondary battery 1, it is possible to further suppress heat generation in the base 11A of the positive electrode current collection plate 11. Consequently, it is possible to implement a secondary battery that withstands charge and discharge of a larger current.

### (2) Second Embodiment

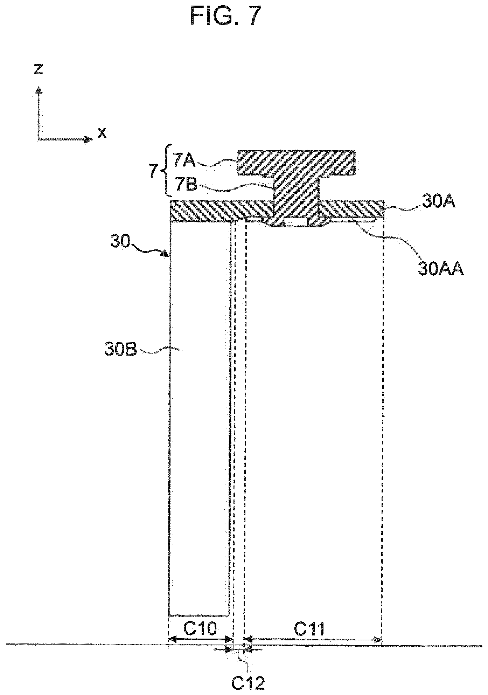

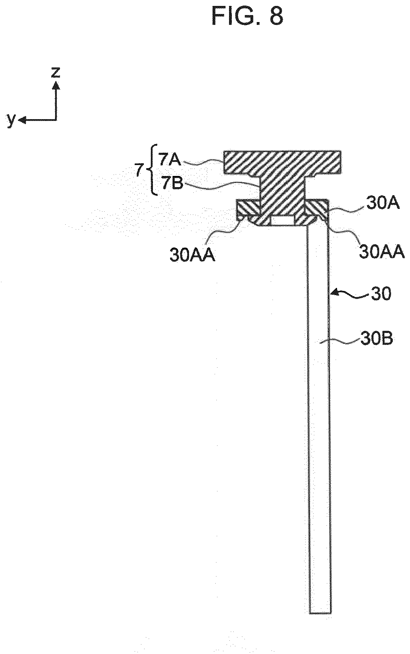

Figure 7 and Figure 8 in which portions corresponding to the portions in Figure 4 are denoted by the same reference numerals and signs show a positive electrode current collection plate 30 according to a second embodiment applied to the secondary battery 1 explained above with reference to Figure 1 to Figure 3 instead of the positive electrode current collection plate 11 in the first embodiment explained above with reference to Figure 4 and Figure 5. Figure 7 shows a cross section in a plane parallel to an xz plane of the positive electrode current collection plate 30 and the positive electrode external terminal 7 in a state in which the positive electrode external terminal 7 is connected to the positive electrode current collection plate 30 in this embodiment. Figure 8 shows a cross section in a plane parallel to a yz plane of the positive electrode current collection plate 30 and the positive electrode external terminal 7 in such a state.

Note that a configuration of a negative electrode current collection plate according to this embodiment applied to the secondary battery 1 explained above with reference to Figure 1 to Figure 3 instead of the negative electrode current collection plate 12 in the first embodiment is the same as the configuration of the positive electrode current collection plate 30. Therefore, detailed explanation of the configuration of the negative electrode current collection plate is omitted here.

The positive electrode current collection plate 30 in this embodiment has a same configuration as the positive electrode current collection plate 11 in the first embodiment in that the positive electrode current collection plate 30 is configured from a base 30A formed to be bent to face the battery lid 4 in parallel and an extending section 30B extending in the bottom surface 3D direction along the wide side surface 3A of the battery can 3 explained above with reference to Figure 1.

As in the positive electrode current collection plate 11 in the first embodiment, the base 30A of the positive electrode current collection plate 30 is configured from a first base constituent section C10 that is a part that configures one end side in the longitudinal direction of the base 30A and continues to the extending section 30B, a second base constituent section C11 that configures the other end side in the longitudinal direction of the base 30A and to which the positive electrode external terminal 7 is connected, and a third base constituent section C12 that is a constituent part of the base 30A between the first base constituent section C10 and the second base constituent section C11.

In the positive electrode current collection plate 30 in this embodiment as well, whereas the first base constituent section C10 is formed in a same thickness as the extending section 30B, the second base constituent section C11 is formed thinner than the first base constituent section C10 by pressing, cutting, or the like. Therefore, the lower surface side of the third base constituent section C12 is formed in a taper shape inclining from the first base constituent section C10 toward the second base constituent section C11.

In addition to the configuration explained above, on the lower surface side of the second base constituent section C11 in the positive electrode current collection plate 30, ribs 30AA projecting in a direction separating from the battery lid 4 are provided respectively along end sides in the width direction of the second base constituent section C11 (the y direction). In the case of this embodiment, a height of the ribs 30AA is selected to a same height as a difference between the thickness of the first base constituent section C10 and a thickness of the second base constituent section C11. However, any height can be applied as the height of the ribs 30AA.

Therefore, with the positive electrode current collection plate 30 in this embodiment, it is possible to suppress, with the ribs 30AA, deformation of the second base constituent section C11 due to forming the second base constituent section C11 of the base 30A thinner than the first base constituent section C10. Consequently, it is possible to effectively prevent deformation of the second base constituent section C11 at the time when the connecting section 7B of the positive electrode external terminal 7 is caulked to be plastically deformed to expand the distal end of the connecting section 7B on the lower surface of the base 30A.

As explained above, according to this embodiment, in addition to the effects obtained by the first embodiment, it is possible to obtain an effect that it is possible to suppress deformation of the second base constituent section C11 of the base 30A and the entire base 30A at the time of connecting the positive electrode external terminal 7 to the base 30A of the positive electrode current collection plate 30 and at the time of connecting the negative electrode external terminal 8 to the base of the negative electrode current collection plate.

### (3) Third Embodiment

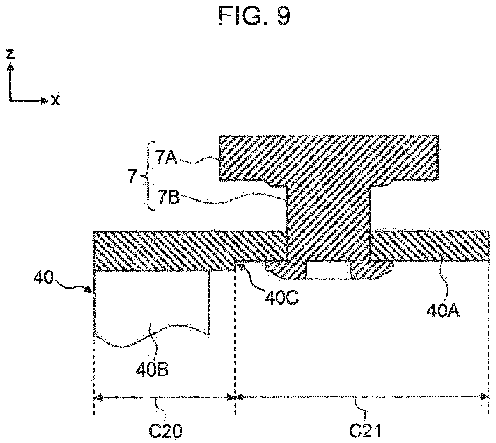

Figure 9 in which portions corresponding to the portions in Figure 4 are denoted by the same reference numerals and signs shows a configuration of a part of a positive electrode current collection plate 40 according to a third embodiment applied to the secondary battery 1 explained above with reference to Figure 1 to Figure 3 instead of the positive electrode current collection plate 11 in the first embodiment explained above with reference to Figure 4 and Figure 5. Figure 9 is a diagram enlarging and showing a cross section portion in a plane parallel to an xz plane of the positive electrode current collection plate 40 and the positive electrode external terminal 7 in a state in which the positive electrode external terminal 7 is connected to the positive electrode current collection plate 40 in this embodiment.

Note that a configuration of a negative electrode current collection plate according to this embodiment applied to the secondary battery 1 explained above with reference to Figure 1 to Figure 3 instead of the negative electrode current collection plate 12 in the first embodiment is the same as the configuration of the positive electrode current collection plate 30. Therefore, detailed explanation of the configuration of the negative electrode current collection plate is omitted here.

The positive electrode current collection plate 40 in this embodiment has a same configuration as the positive electrode current collection plate 11 in the first embodiment in that the positive electrode current collection plate 40 is configured from a base 40A formed to be bent to face the battery lid 4 in parallel and an extending section 40B extending in the bottom surface 3D direction along the wide side surface 3A of the battery can 3.

However, the base 40A of the positive electrode current collection plate 40 is configured from only a first base constituent section C20 that is a part that configures one end side in the longitudinal direction of the base 40A and continues to an extending section 40B and a second base constituent section C21 that configures the other end side in the longitudinal direction of the base 40A and to which the positive electrode external terminal 7 is connected. That is, a boundary between the first base constituent section C20 and the second base constituent section C21 is formed as an inclined surface 40C having an inclination angle of 90 degrees that connects the lower surface of the first base constituent section C20 and the lower surface of the second base constituent section C21.

Note that, when the base 40A of the positive electrode current collection plate 40 is configured as explained above, it is difficult to form such an inclined surface 40C when the second base constituent section C21 is thinned by pressing. Therefore, the second base constituent section C21 is formed by cutting and such an inclined surface 40C is formed at this time.

With the positive electrode current collection plate 40 in this embodiment having the configuration explained above and the negative electrode current collection plate having the same configuration, as in the positive electrode current collection plate 11 and the negative electrode current collection plate 12 according to the first embodiment, it is possible to effectively reduce the volumes and the weights of the positive electrode current collection plate 11 and the negative electrode current collection plate 12 of the secondary battery 1. Therefore, it is possible to implement a secondary battery that can be further reduced in size and weight than the related art and suppresses heat generation and withstands charge and discharge of a large current.

### (4) Fourth Embodiment

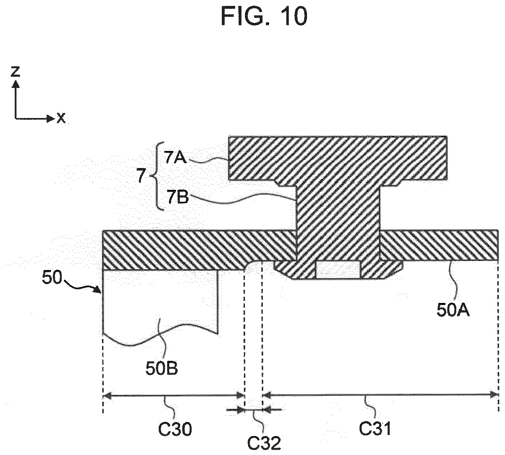

Figure 10 in which portions corresponding to the portions in Figure 4 are denoted by the same reference numerals and signs shows a configuration of a part of a positive electrode current collection plate 50 according to a fourth embodiment applied to the secondary battery 1 explained above with reference to Figure 1 to Figure 3 instead of the positive electrode current collection plate 11 in the first embodiment explained above with reference to Figure 4 and Figure 5. Figure 10 is a diagram enlarging and showing a cross section portion in a plane parallel to an xz plane of the positive electrode current collection plate 50 and the positive electrode external terminal 7 in a state in which the positive electrode external terminal 7 is connected to the positive electrode current collection plate 50 in this embodiment.

Note that a configuration of a negative electrode current collection plate according to this embodiment applied to the secondary battery 1 explained above with reference to Figure 1 to Figure 3 instead of the negative electrode current collection plate 12 in the first embodiment is the same as the configuration of the positive electrode current collection plate 50. Therefore, detailed explanation of the configuration of the negative electrode current collection plate is omitted here.

The positive electrode current collection plate 50 in this embodiment has a same configuration as the positive electrode current collection plate 11 in the first embodiment in that the positive electrode current collection plate 50 is configured from a base 50A formed to be bent to face the battery lid 4 in parallel and an extending section 50B extending in the bottom surface 3D direction along the wide side surface 3A of the battery can 3.

The positive electrode current collection plate 50 is also the same as the positive electrode current collection plate 11 in the first embodiment in that the base 50A of the positive electrode current collection plate 50 is configured from a first base constituent section C30 that is a part that configures one end side in the longitudinal direction of the base 50A and continues to the extending section 50B, a second base constituent section C31 that configures the other end side in the longitudinal direction of the base 50A and to which the positive electrode external terminal 7 is connected, and a third base constituting section C32 that is a constituent part of the base 50A between the first base constituent section C30 and the second base constituent section C31.

However, the positive electrode current collection plate 50 in this embodiment is characterized in that the third base constituent section C32 is not an inclined surface and is formed in a curved surface shape that connects the lower surface of the first base constituent section C30 and the lower surface of the second base constituent section C31. By configuring the positive electrode current collection plate 50 as explained above, when the second base constituent section C31 of the base 50A is thinned, it is possible to use not only cutting but also pressing as a method of the thinning. It is possible to obtain an effect that, when the second base constituent section C31 of the base 50A is thinned, by applying the pressing, it is possible to reduce manufacturing time for the positive electrode current collection plate 50 compared with the cutting and reduce manufacturing cost for the positive electrode current collection plate 50 according to the reduction in the manufacturing time.

### (5) Other embodiments

Note that, in the first to fourth embodiments explained above, the present invention is applied to the square secondary battery configured as shown in Figure 1 to Figure 3. However, the present invention is not limited to this and can be widely applied to secondary batteries having other various configurations.

In the first to fourth embodiments explained above, the current collector (the positive electrode current collection plate 11) that electrically connects the positive electrode stacked section 5A of the storage element 5 and the positive electrode external terminal 7 and the current collector (the negative electrode current collection plate 12) that electrically connects the negative electrode stacked section 5B of the storage element 5 and the negative electrode external terminal 8 are formed by bending a plate-like member. However, the present invention is not limited to this. Other various configurations can be widely applied as the configuration of such current collectors if the current collectors can electrically connect the positive electrode stacked section 5A of the storage element 5 and the positive electrode external terminal 7 and electrically connect the negative electrode stacked section 5B of the storage element 5 and the negative electrode external terminal 8.

Further, in the first to fourth embodiments explained above, the lower surface sides of the second base constituent sections C2, C11, C21, and C31 of the bases 11A, 30A, 40A, and 50A of the positive electrode current collection plates 11, 30, 40, and 50 and the second base constituent section of the base 12A of the negative electrode current collection plate 12 are thinned by pressing, cutting, or the like. However, the present invention is not limited to this. The entire upper surface side or the entire both surface sides of the upper surface side and the lower surface side of such second base constituent sections C2, C11, C21, and C31 may be thinned.

Further, in the second embodiment explained above, the ribs 30AA are provided on the lower surface side of the second base constituent section C11 of the base 30A of the positive electrode current collection plate 30. However, the present invention is not limited to this. Such ribs 30AA may be provided on the upper surface side of such a second base constituent section C11 to project in a direction approaching the battery lid 4.

Further, in the second embodiment explained above, the ribs 30AA are provided only on the lower surface side of the second base constituent section C11 of the base 30A of the positive electrode current collection plate 30. However, the present invention is not limited to this. Ribs integral with such ribs 30AA may be formed on the lower surfaces of the third base constituent section C12 and/or the first base constituent section C10 as well.

Further, in the second embodiment explained above, the ribs 30AA are respectively provided at both the end portions in the width direction on the lower surface of the second base constituent section C11 of the base 30A of the positive electrode current collection plate 30. However, the present invention is not limited to this. The ribs 30AA may be provided only on one end side in the width direction on the lower surface of such a second base constituent section C11. The ribs 30AA may be provided in places other than the end portions in the width direction on the lower surface of such a second base constituent section C11, the places not obstructing the connection of the positive electrode external terminal 7.

### Industrial Applicability

The present invention can be widely applied to a square secondary battery and secondary batteries of other forms.

### Reference Signs List

1······secondary battery, 2······battery container, 3······battery can, 4······battery lid, 5······storage element, 5A······positive electrode stacked section, 5B······negati ve electrode stacked section, 7······positive electrode external terminal, 7A, 8A······joining section, 7B, 8B······connecting section, 8······negative electrode external terminal, 11, 30, 40, 50······positive electrode current collection plate, 11A, 12A, 30A, 40A, 50A······base, 12······negative electrode current collection plate, 30AA······rib, 11B, 12B, 30B, 40B, 50B······extending section, 40C······inclined surface, C1 to C3, C10 to C12, C20, C21, C30 to C32······base constituent section.

## Claims

1. A secondary battery in which a storage element that charges and discharges electricity is housed in an exterior body, the secondary battery comprising:
a box body configuring the exterior body and opened on one surface side and a lid that closes the one surface side of the box body;
an external terminal attached to the lid to expose at least a part thereof to an outside from the lid; and
a current collector that electrically connects the storage element and the external terminal, wherein
the current collector includes:
a first extending section electrically connected to the storage element; and
a plate-like second base disposed along the lid and electrically connected to the external terminal,
the base includes:
a first base constituent section that is a part that forms one end side in a longitudinal direction of the base and continues from the first extending section; and
a second base constituent section that forms another end side in the longitudinal direction of the base and is connected to the external terminal, and
the second base constituent section is formed thinner than the first base constituent section.

2. The secondary battery according to claim 1, wherein the second base constituent section is formed thinner than the first base constituent section in an entire region in the longitudinal direction of the base.

3. The secondary battery according to claim 1, wherein the second base constituent section is thinned such that a surface facing the storage element is located in a direction in which the surface further separates from the storage element than a surface facing the storage element in the first base constituent section.

4. The secondary battery according to claim 1, wherein a rib projecting in a direction approaching the lid or separating from the rid is provided on at least one end side in a width direction of a first surface facing the lid or a second surface on an opposite side of the first surface in the second base constituent section.

5. The secondary battery according to claim 4, wherein a ratio of a thickness of the first base constituent section and a thickness of the second base constituent section is 5:2 or higher and 5:3 or lower.

6. The secondary battery according to claim 1, further comprising a third base constituent section provided between the first base constituent section and the second base constituent section of the base, at least one surface side of the third base constituent section being formed in a taper shape inclining from the first base constituent section toward the second base constituent section.

7. The secondary battery according to claim 1, wherein one surface side of the first base constituent section and one surface side of the second base constituent section are connected by an inclined surface having an inclination angle of 90 degrees.

8. The secondary battery according to claim 1, further comprising a third base constituent section provided between the first base constituent section and the second base constituent section of the base, at least one surface side of the third base constituent section being formed in a curved surface shape that connects one surface of the first base constituent section and one surface of the second base constituent section.

9. The secondary battery according to claims 1 to 6, wherein
the current collector includes a positive electrode current collector connected to a positive electrode of the storage element and a negative electrode current collector connected to a negative electrode of the storage element,
the external terminal includes a positive electrode external terminal connected to the positive electrode current collector and a negative electrode external terminal connected to the negative electrode current collector, and
a thickness of the second base constituent section of the base in the positive electrode current collector is larger than a thickness of the second base constituent section of the base in the negative electrode current collector.
